# EUROPEAN PATENT SPECIFICATION

(11) **EP 1 224 383 B1**
(45) Date of publication and mention of the grant of the patent: **12.10.2005**
(21) Application number: 00975085.2
(22) Date of filing: 23.10.2000
(51) Int. Cl.: F01L 1/34, F01N 3/20, F02D 13/02

(54) **METHOD OF REDUCING EMISSIONS IN THE EXHAUST GASES OF AN INTERNAL COMBUSTION ENGINE**
VERFAHREN ZUM VERMINDERN DER EMISSIONEN IN EINER BRENNKRAFTMASCHINE
PROCEDE DE REDUCTION D'EMISSIONS DE GAZ D'ECHAPPEMENT D'UN MOTEUR A COMBUSTION INTERNE

(30) Priority: 25.10.1999 SE 9903836
(43) Date of publication of application: 24.07.2002
(73) Proprietor: Volvo Personvagnar AB, 405 08 Göteborg (SE)
(72) Inventor: ALMKVIST, Göran, S-443 41 Gräbo (SE); THORN, Karin, S-414 62 Gothenburg (SE); SJÖSTRÖM, Sten, S-413 16 Göteborg (SE)
(74) Representative: Hellbom, Lars Olof
(86) International application number: PCT/SE2000/002052
(87) International publication number: WO 2001/031173

(56) References cited:
- EP-A1- 0 718 475
- EP-A2- 0 826 870
- WO-A1-91/16529
- DE-A1- 3 506 107
- JP-A- 3 074 563
- JP-A- 4 311 645
- JP-A- 6 117 349
- JP-A- 7 139 389
- US-A- 5 850 811
- US-A- 5 957 096

## Description

The present invention relates to a method of reducing emissions in the exhaust gases of an internal combustion engine which comprises at least one cylinder to which an air/fuel mixture is supplied when a crankshaft of the internal combustion engine is to be made to rotate, at least one inlet valve, at least one inlet duct connected to the inlet valve, at least one exhaust valve, control members for controlling the opening and closing of the inlet and exhaust valves, and a piston reciprocating between a top dead-centre position and a bottom dead-centre position in the cylinder.

It is desirable to reduce the undesirable emissions present in the exhaust gases of the internal combustion engine in order thus to reduce pollution of the surrounding environment and to satisfy legal requirements for internal combustion engines. The undesirable emissions present in the exhaust gases include inter alia carbon monoxide CO, hydrocarbon compounds HC and nitrogen oxides NOx.

In order to reduce these emissions in the exhaust gases, the engine is provided with a catalytic converter which, by means of a chemical reaction, burns the abovementioned emissions completely. The chemical reaction in the catalytic converter occurs only when the catalytic converter has reached a predetermined working temperature which is reached after a predetermined operating time of the engine. When the engine is cold-started, there is therefore no reduction of the abovementioned emissions in the catalytic converter.

There are known arrangements which heat the catalytic converter when the engine is cold-started for the purpose of rapidly reaching a desirable working temperature of the catalytic converter so as thus to make it possible to reduce said emissions in the exhaust gases of the engine at an early stage. In such a known arrangement, an electric heating element is arranged in the catalytic converter. This arrangement makes the catalytic converter complicated and expensive to produce.

Another problem which arises when internal combustion engines are cold-started is that a comparatively great amount of fuel in relation to the air supplied, that is to say a rich air/fuel mixture, has to be supplied to the engine in order that the engine will start and the engine will be capable of working at an essentially constant speed during idle running. This rich air/fuel mixture is also supplied in order that the engine will be ready to provide increased torque when the accelerator is operated and in order that the engine will be less sensitive to different fuel qualities. The drivability of the engine is thus ensured before the engine has reached its operating temperature.

The absence of emission control in the catalytic converter and the rich air/fuel mixture result in the content of carbon monoxide CO, hydrocarbon compounds HC and nitrogen oxides NOx emitted from the engine being high when the engine is cold-started.

Attempts have previously been made to reduce the quantity of fuel in relation to the air supplied, that is to say to run the engine with a leaner air/fuel mixture when the engine is cold-started. This has nevertheless led to the engine working very unevenly when idling and also the drivability of the engine being poor. The reason why the engine speed varies during idle running is that the torque generated by the engine is very sensitive to variations in the lambda value of the air/fuel mixture supplied to the cylinder space of the engine when the air/fuel mixture is lean. The definition of the lambda value, or the excess air factor as it is also known, is the actual air quantity supplied divided by the air quantity theoretically necessary for complete combustion. If the lambda value is greater than 1, the air/fuel mixture is lean and, if the lambda value is smaller than 1, the air/fuel mixture is rich.

The fuel supplied from a fuel injection valve can be controlled accurately by means of the fuel injection -system of the engine in order thus to obtain an essentially constant lambda value for the air/fuel mixture supplied. When the engine is cold, however, fuel will condense on the comparatively cold walls in the inlet duct and in the cylinder. The fuel condensed on the walls will be vaporized and accompany the air/fuel mixture which is flowing in the inlet duct and being supplied to the cylinder space. If the vaporization of the fuel condensed on the walls is uneven, on account of pressure variations, temperature gradients, or the flow rate of the air/fuel mixture in the inlet duct, the lambda value of the air/fuel mixture supplied to the cylinder space will vary.

As the torque generated by the engine will vary during idle running when cold-started, the speed of the engine will vary. In this connection, the speed of the engine means the speed of rotation of the crankshaft of the engine. When the speed varies, the pressure in the inlet duct will also vary, which in turn leads to the vaporization of the condensed fuel varying, so that a variation of the lambda value of the air/fuel mixture supplied to the cylinder space occurs. The uneven speed of the engine is thus intensified.

US-A-5957096 discloses an internal combustion engine, in which a lean air/fuel mixture is supplied to the cylinders, and the inlet valve is opened after the TDC position of the piston. JP04311645A, JP07139389A, JP06117349A and JP03074563 disclose operating internal combustion engines with a lean mixture under high load. However, none of these documents are concerned with cold-start conditions.

One object of the present invention is to reduce carbon monoxide CO, hydrocarbon compounds HC and nitrogen oxides NOx in the exhaust gases of an internal combustion engine when cold-started.

Another object of the invention is to make it possible for an internal combustion engine to work with a lean air/fuel mixture.

A further object of the invention is to reach the working temperature of the catalytic converter as rapidly as possible.

A further object of the invention is to reach the working temperature of the internal combustion engine as rapidly as possible.

This is achieved by a method of the type indicated in the introduction, which comprises the steps: an air/fuel mixture with a lambda value greater than 1 is supplied to the cylinder; the internal combustion engine is controlled so that it works at high load, and the inlet valve is controlled so that it opens after the piston has passed the top dead-centre position, which method is used principally when cold-starting the internal combustion engine.

By supplying an air/fuel mixture greater than 1 to the cylinder, the total amount of said emissions in the exhaust gases emitted from the internal combustion engine is reduced. In order to make it possible to operate the engine with a lean air/fuel mixture, the inlet valve is opened after the piston has passed the top dead-centre position, so that powerful swirling of the air/fuel mixture supplied to the cylinder space is obtained. By controlling the engine so that it works at high load, condensed fuel on the walls of the inlet duct will have little effect on the mixing ratio between the air and the fuel, which results in the lambda value of the air/fuel mixture supplied to the cylinder space remaining essentially constant. The crankshaft will thus rotate at an essentially constant speed during idle running. Furthermore, the amount of residual gases will be minimized on account of there being no overlap when the inlet and exhaust valves are open.

The invention is explained in greater detail below with reference to an exemplary embodiment shown in the appended drawings, in which
Fig. 1 shows a section through an internal combustion engine,
Fig. 2 shows a diagram of the opening and closing times of the inlet valve and the exhaust valve, and
Fig. 3 shows a diagram of the heating time of the catalytic converter for a conventionally controlled internal combustion engine and an internal combustion engine controlled according to the method according to the present invention.

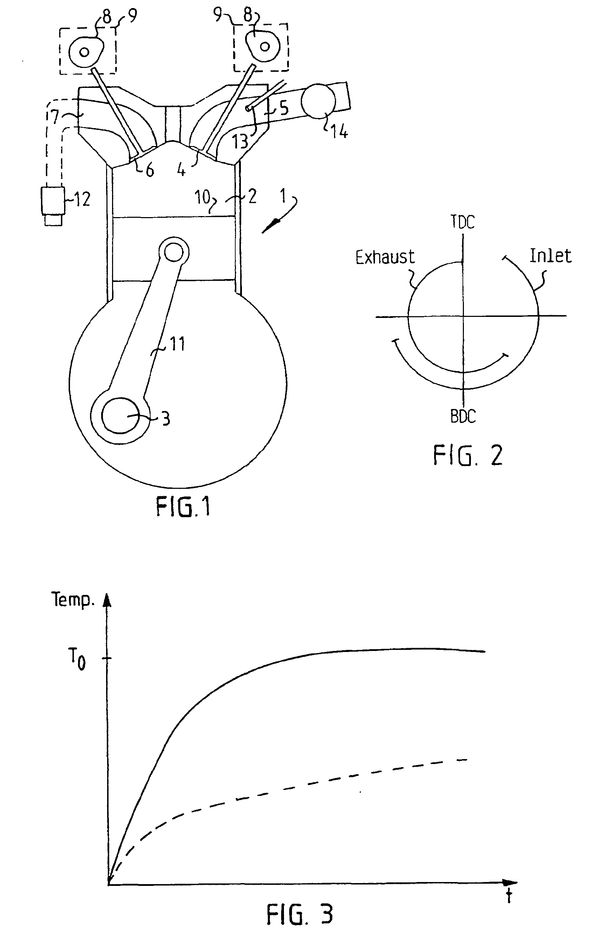

Fig. 1 shows an internal combustion engine 1 which comprises at least one cylinder 2 to which an air/fuel mixture is supplied when a crankshaft 3 of the engine 1 is to be made to rotate. At least one inlet valve 4 is arranged so as to open and close inlet ducts 5 which are connected to the cylinder 2 and through which an air/fuel mixture is supplied when the engine 1 is working. At least one exhaust valve 6 is arranged so as to open and close exhaust ducts 7 which are connected to the cylinder 2 and through which burnt fuel in the form of exhaust gases is removed when the engine 1 is working. The engine 1 also comprises control members 8 arranged so as to control the opening and closing of the inlet and exhaust valves 4, 6. In the exemplary embodiment shown in Fig. 1, the control members 8 consist of camshafts which can be adjustable so that the time of opening and closing of the inlet and exhaust valves 4, 6 can be varied. This is brought about by, for example, a regulating arrangement 9 which is shown diagrammatically in Fig. 1 and in a known manner rotates the camshafts hydraulically. Other control members 8 are also possible, such as electromagnetically controlled valves. A piston 10, which reciprocates between a top and a bottom dead-centre position in the cylinder 2, is mounted on the crankshaft 3 by means of a connecting rod 11. The engine 1 is preferably of the multi-cylinder type. Fuel is supplied through an injection nozzle 13 arranged in the inlet duct 5. The fuel is therefore injected into the inlet duct 5 in the direction towards the inlet valve 4 and the cylinder 2.

An exhaust turbo or a mechanical compressor 14 can be coupled to the inlet duct 5 of the engine 1. In the case of a supercharged engine 1, energy is supplied from the compressor or the turbo 14, so that the combustion temperature after the expansion in the cylinder 2 increases further. A catalytic converter 12 coupled to the engine 1 can thus also be heated more rapidly.

The exhaust turbo or the compressor 14 also brings about a positive pressure in the inlet duct 5, which results in the difference between the negative pressure in the cylinder 2, immediately before the inlet valve 4 opens, and the positive pressure in the inlet duct 5 increasing.

An exemplary embodiment of the method according to the present invention is shown in Fig. 2 which shows a diagram of the opening and closing times of both inlet and exhaust valves 4, 6. During the induction stroke, an air/fuel mixture with a lambda value greater than 1 is supplied to the cylinder 2. The lambda value lies principally within the range 1.0 - 1.4 and preferably within the range 1.05 - 1.2. The content of carbon monoxide CO, hydrocarbon compounds HC and nitrogen oxides NOx in the exhaust gases depends on inter alia the mixing ratio of the air/fuel mixture supplied to the cylinder 2. This mixing ratio is usually indicated by a lambda value. The definition of the lambda value, or the excess air factor as it is also known, is the actual air quantity supplied divided by the air quantity theoretically necessary. If the lambda value is greater than 1, the air/fuel mixture is lean and, if the lambda value is smaller than 1, the air/fuel mixture is rich. The aim is to supply a lean air/fuel mixture when the engine is cold, so that the content of carbon monoxide CO, hydrocarbon compounds HC and nitrogen oxides NOx which are emitted from the engine 1 in the form of exhaust gases is low. By reaching the working temperature of the catalytic converter at an early stage, the total quantity of carbon monoxide CO, hydrocarbon compounds HC and nitrogen oxides NOx emitted will be reduced.

In order that the operation of the engine 1 does not become uneven when a lean air/fuel mixture is supplied, for the reasons indicated in the introduction to the description, the inlet valve 4 is controlled so that it opens after the piston 10 has passed the top dead-centre position. By controlling the inlet valve 4 so that it opens at a crankshaft angle of 20° - 100° after the top dead-centre position, preferably at a crankshaft angle of 30° after the top dead-centre position, a negative pressure is brought about in the cylinder 2. At the crankshaft angles indicated above, the inlet valve 4 will be sufficiently open for the air/fuel mixture to be allowed to flow into the cylinder 2. A prerequisite for a negative pressure being formed in the cylinder 2, however, is that the exhaust valve 6 is controlled so that it closes before the inlet valve 4 opens. The exhaust valve 6 is preferably controlled so that it closes when the piston 10 is at top dead centre. Both the exhaust valve 6 and the inlet valve 4 are thus closed at the same time as the piston 10 moves downwards in the direction of bottom dead centre, as a result of which a negative pressure is formed in the cylinder 2. When the inlet valve 4 is then opened, the air/fuel mixture flows into the cylinder 2 at a great flow rate on account of the negative pressure in the cylinder 2. This great flow rate contributes to a desirable swirling and thus mixing of the air/fuel mixture. By opening the inlet valve 4, as described above, exhaust gases are also prevented from flowing into the inlet duct 5. If exhaust gases were to flow into the inlet duct 5, it would affect the vaporization of fuel condensed on the walls of the inlet duct 5, which would lead to a change in torque of the crankshaft 3 of the engine 1, and thus uneven operation of the engine 1. In this connection, crankshaft angle means the angle through which the crankshaft 3 has rotated since the piston 10 was located in the top dead-centre position. When the piston 10 is located in the top dead-centre position, the crankshaft angle is therefore zero. The procedure also results in the remaining amount of exhaust gases, also known as the residual, in the cylinder 2 being minimized, which contributes to improved combustion quality of the air/fuel mixture supplied to the cylinder 2.

The inlet valve 4 can be controlled so that it closes after the piston 10 has reached bottom dead centre.

When a cold internal combustion engine 1 is started, the catalytic converter 12 arranged in the engine 1 is also cold. As mentioned in the introduction to the description, the catalytic converter 12 has to reach a certain working temperature in order for the catalytic converter 12 to be capable of effectively reducing the toxic emissions in the exhaust gases of the engine 1. Ignition of the air/fuel mixture supplied to the cylinder 2 is carried out at a crankshaft angle of 10° before to 30° after the top dead-centre position, preferably at a crankshaft angle of 0° - 10° after the top dead-centre position. The engine 1 is thus controlled so that it will work at high load, because the shifted ignition time results in the power of the engine 1 being lower. The engine 1 can also be controlled so as to work at high load by closing the inlet valve 4 late, so that some of the air/fuel mixture supplied to the cylinder 2 is led back to the inlet duct 5. A lean air/fuel mixture also results in the engine 1 working at high load. At high load of the internal combustion engine 1, the negative pressure in the inlet duct 5 is small even at great speed. The power of the engine 1 is thus lower. It is also possible to control the engine 1 so that it works at high load by connecting an external load, such as a generator (not shown), to the engine 1.

By injecting the fuel into the inlet duct 5 before the inlet valve 4 has opened, the fuel will be supplied to the cylinder 2 together with the induction air at a very great rate. The fuel will thus be finely distributed and mixed with the induction air.

The engine 1 is preferably controlled so that the crankshaft 3 rotates at an essentially constant speed within the range 1000 - 2000 revolutions per minute (rpm), which means that a great many working cycles per unit of time are obtained, which in turn leads to a great amount of energy per unit of time in the form of heat being supplied to the catalytic converter 12. This results in rapid heating of the catalytic converter 12 and the engine 1.

Fig. 3 shows a diagram of the heating time of the catalytic converter 12 for a conventionally controlled internal combustion engine and an internal combustion engine 1 controlled according to the method according to the present invention. The solid curve in Fig. 3 relates to the heating time of the catalytic converter 12 for an internal combustion engine controlled according to the method according to the present invention, and the broken line relates to the heating time of the catalytic converter for a conventionally controlled internal combustion engine. As can be seen from the diagram in Fig. 3, the catalytic converter 12 of the engine 1 controlled according to the method according to the present invention will reach the working temperature To earlier than the catalytic converter of the engine controlled conventionally.

## Claims

1. Method of reducing emissions in the exhaust gases of an internal combustion engine (1) which comprises at least one cylinder (2) to which an air/fuel mixture is supplied when a crankshaft (3) of the internal combustion engine (1) is to be made to rotate, at least one inlet valve (4), at least one inlet duct (5) connected to the inlet valve (4), at least one exhaust valve (6), control members (8) for controlling the opening and closing of the inlet and exhaust valves (4, 6), and a piston (10) reciprocating between a top dead-centre position and a bottom dead-centre position in the cylinder (2), the method comprising the following steps: an air/fuel mixture with a lambda value greater than 1 is supplied to the cylinder (2), and the inlet valve (4) is controlled so that it opens after the piston (10) has passed the top dead-centre position, **characterized in that** the internal combustion engine (1) is controlled so that it works at high load, and **in that** the method is used principally when cold-starting the internal combustion engine (1).

2. Method according to Claim 1, **characterized in that** the inlet valve (4) is controlled so that it opens at a crankshaft angle of 20° - 100° after the top dead-centre position, preferably at a crankshaft angle of 30° after the top dead-centre position.

3. Method according to Claim 1 or 2, **characterized in that** the exhaust valve (6) is controlled so that it closes before the inlet valve (4) opens.

4. Method according to any one of the preceding claims, **characterized in that** the exhaust valve (6) is controlled so that it closes in the top dead-centre position in order to minimize exhaust gases remaining in the cylinder (2).

5. Method according to any one of the preceding claims, **characterized in that** fuel is supplied to the inlet duct (5) before the inlet valve (4) opens.

6. Method according to any one of the preceding claims, **characterized in that** the internal combustion engine (1) is controlled so that the crankshaft (3) rotates at an essentially constant speed within the range 1000 - 2000 rpm.

7. Method according to any one of the preceding claims, **characterized in that** an exhaust turbo or a compressor (14) brings about a positive pressure in the inlet duct (5).

8. Method according to any one of the preceding claims, **characterized in that** ignition of the air/fuel mixture supplied to the cylinder (2) is carried out at a crankshaft angle of 10° before to 20° after the top dead-centre position, preferably at a crankshaft angle of 0° - 10° after the top dead-centre position.

9. Method according to any one of the preceding claims, **characterized in that** the lambda value of the air/fuel mixture combusted during the expansion stroke lies principally within the range 1.0 - 1.4 and preferably within the range 1.05 - 1.2.

10. Method according to any one of the preceding claims, **characterized in that** the control members (8) for controlling the opening and closing of the inlet and exhaust valves (4, 6) are adjustable, so that the time of opening and closing of the inlet and exhaust valves (4, 6) can be varied.

## Patentansprüche

1. Verfahren zum Vermindern der Emissionen in den Abgasen eines Verbrennungsmotors (1), der mindestens einen Zylinder (2), zu welchem ein Luft-/Kraftstoffgemisch zugeführt wird, wenn eine Kurbelwelle (3) des Verbrennungsmotors (1) veranlasst wird, zu rotieren, mindestens ein Einlassventil (4), mindestens eine Einlassleitung (5), die mit dem Einlassventil (4) verbunden ist, mindestens ein Auslassventil (6), Steuerelemente (8) zum Steuern des Öffnens und Schließens der Einlass- und Auslassventile (4, 6), und einen Kolben (10), der sich zwischen einer oberen Totpunktposition und einer unteren Totpunktposition in dem Zylinder (2) hin- und herbewegt, aufweist, wobei das Verfahren die folgenden Schritte aufweist: ein Luft-/Kraftstoffgemisch mit einem Lambdawert von größer als 1 wird zu dem Zylinder (2) zugeführt, und das Einlassventil (4) wird derart gesteuert, dass es öffnet, nachdem der Kolben (10) die obere Totpunktposition passiert hat, **dadurch gekennzeichnet, dass** der Verbrennungsmotor (1) derart gesteuert wird, dass er bei einer hohen Last arbeitet, und dass das Verfahren prinzipiell beim Kaltstarten des Verbrennungsmotors (1) eingesetzt wird.

2. Verfahren nach Anspruch 1, **dadurch gekennzeichnet, dass** das Einlassventil (4) derart gesteuert wird, dass es bei einem Kurbelwellenwinkel von 20° - 100° nach der oberen Totpunktposition, bevorzugt bei einem Kurbelwellenwinkel von 30° nach der oberen Totpunktposition öffnet.

3. Verfahren nach Anspruch 1 oder 2, **dadurch gekennzeichnet, dass** das Auslassventil (6) derart gesteuert wird, dass es schließt, bevor das Einlassventil (4) öffnet.

4. Verfahren nach einem der vorhergehenden Ansprüche, **dadurch gekennzeichnet, dass** das Auslassventil (6) derart gesteuert wird, dass es in der oberen Totpunktposition schließt, um in dem Zylinder (2) verbleibende Abgase zu minimieren.

5. Verfahren nach einem der vorhergehenden Ansprüche, **dadurch gekennzeichnet, dass** Kraftstoff zu der Einlassleitung (5) zugeführt wird, bevor das Einlassventil (4) öffnet.

6. Verfahren nach einem der vorhergehenden Ansprüche, **dadurch gekennzeichnet, dass** der Verbrennungsmotor (1) derart gesteuert wird, dass die Kurbelwelle (3) mit einer im wesentlichen konstanten Geschwindigkeit innerhalb des Bereichs von 1000 - 2000 U/min rotiert.

7. Verfahren nach einem der vorhergehenden Ansprüche, **dadurch gekennzeichnet, dass** ein Abgasturbo oder ein Kompressor (14) einem positiven Druck in der Einlassleitung (5) entstehen lässt.

8. Verfahren nach einem der vorhergehenden Ansprüche, **dadurch gekennzeichnet, dass** eine Zündung des zu dem Zylinder (2) zugeführten Luft-/Kraftstoffgemisches bei einem Kurbelwellenwinkel von 10° vor oder 20° nach der oberen Totpunktposition ausgeführt wird, bevorzugt bei einem Kurbelwellenwinkel von 0° - 10° nach der oberen Totpunktposition.

9. Verfahren nach einem der vorhergehenden Ansprüche, **dadurch gekennzeichnet, dass** der Lambdawert des während des Expansionshubes verbrannten Luft-/Kraftstoffgemischs prinzipiell im Bereich von 1,0 - 1,4 und bevorzugt im Bereich von 1,05 - 1,2 liegt.

10. Verfahren nach einem der vorhergehenden Ansprüche, **dadurch gekennzeichnet, dass** die Steuerelemente (8) zum Steuern des Öffnens und Schließens der Einlass- und Auslassventile (4, 6) einstellbar sind, so dass die Zeit des Öffnens und Schließens der Einlass- und Auslassventile (4, 6) variiert werden kann.

## Revendications

1. Une méthode de réduction d'émissions dans les gaz d'échappement d'un moteur à combustion interne (1) qui comporte au moins un cylindre (2) auquel un mélange d'air/carburant est fourni lorsqu'un vilebrequin (3) d'un moteur à combustion interne (1) est mis en rotation, au moins une soupape d'admission (4), au moins une conduite d'admission (5) connectée à la soupape d'admission (4), au moins une soupape d'échappement (6), des pièces de commande (8) pour contrôler l'ouverture et la fermeture des soupapes d'admission et d'échappement (4, 6), et un piston (10) en mouvement de va-et-vient entre une position de point mort supérieur et une position de point mort inférieur dans le cylindre (2), la méthode comportant les étapes suivantes: un mélange d'air/carburant avec une valeur lambda supérieure à 1 est fourni au cylindre (2) et la valve d'admission (4) est contrôlée de façon à s'ouvrir après que le piston a passé la position de point mort supérieur, **caractérisée en ce que** le moteur à combustion interne (1) est contrôlé de façon à fonctionner à haute charge, et **en ce que** la méthode est utilisée principalement lors d'un démarrage à froid du moteur à combustion interne (1).

2. Une méthode selon la revendication 1, **caractérisée en ce que** la soupape d'admission (4) est contrôlée de façon à s'ouvrir à un angle de vilebrequin de 0° - 100° après la position de point mort supérieur, préférablement à un angle de vilebrequin de 30° après la position de point mort supérieur.

3. Une méthode selon la revendication 1 ou 2, **caractérisée en ce que** la soupape d'échappement (6) est contrôlée de façon à se fermer avant que la soupape d'admission (4) s'ouvre.

4. Une méthode selon l'une quelconque de revendications précédentes, **caractérisée en ce que** la soupape d'échappement (6) est contrôlée de façon à se fermer dans la position de point mort supérieur afin de diminuer les gaz d'échappement qui restent dans le cylindre (2).

5. Une méthode selon l'une quelconque de revendications précédentes, **caractérisée en ce que** le carburant est fourni à la conduite d'admission (5) avant que la soupape d'admission (4) s'ouvre.

6. Une méthode selon l'une quelconque de revendications précédentes, **caractérisée en ce que** le moteur à combustion interne (1) est contrôlé de façon à ce que le vilebrequin (3) tourne à une vitesse essentiellement constante dans l'intervalle entre 1000 - 2000 rpm.

7. Une méthode selon l'une quelconque de revendications précédentes, **caractérisée en ce qu'**un turbocompresseur d'échappement ou un compresseur (14) engendrent une pression positive dans la conduite d'admission (5).

8. Une méthode selon l'une quelconque de revendications précédentes, **caractérisée en ce que** l'allumage du mélange d'air/carburant fourni au cylindre (2) est accompli à un angle de vilebrequin se situant entre 10° avant et 20° après la position de point mort supérieur, préférablement à un angle de vilebrequin de 0° - 10° après la position de point mort.

9. Une méthode selon l'une quelconque de revendications précédentes, **caractérisée en ce que** la valeur lambda du mélange d'air/carburant brûlé pendant la course d'explosion se situe principalement dans l'intervalle entre 1.0 - 1.4 et préférablement dans l'intervalle entre 1.05- 1.2.

10. Une méthode selon l'une quelconque de revendications précédentes, **caractérisée en ce que** les pièces de commande (8) pour contrôler l'ouverture et la fermeture des soupapes d'admission et d'échappement (4, 6) sont ajustables, de façon à ce que le temps d'ouverture et de fermeture des soupapes d'admission et d'échappement (4, 6) puisse être modifié.
